# EUROPÄISCHE PATENTSCHRIFT

(11) **EP 3 701 161 B1**
(45) Veröffentlichungstag und Bekanntmachung des Hinweises auf die Patenterteilung: **29.06.2022**
(21) Anmeldenummer: 18800048.3
(22) Anmeldetag: 22.10.2018
(51) Int. Cl.: F16D 7/02, F16D 3/79, F16D 1/08

(54) **DREHMOMENTÜBERTRAGUNGSVORRICHTUNG**
TORQUE-TRANSMITTING APPARATUS
DISPOSITIF DE TRANSMISSION DE COUPLE

(30) Priorität: 24.10.2017 DE 102017124829
(43) Veröffentlichungstag der Anmeldung: 02.09.2020
(73) Patentinhaber: RENK GmbH, 86159 Augsburg (DE)
(72) Erfinder: SFAR, Mohamed, 48477 Hörstel (DE); THESING, Andreas, 48431 Rheine (DE); DRERUP, Matthias, 48485 Neuenkirchen (DE)
(74) Vertreter: Lelgemann, Karl-Heinz
(86) Internationale Anmeldenummer: PCT/EP2018/078928
(87) Internationale Veröffentlichungsnummer: WO 2019/081444

(56) Entgegenhaltungen:
- EP-A2- 0 816 703
- DE-A1- 4 028 158
- DE-B4-112004 002 516
- DE-T2- 69 626 669
- DE-U1- 8 633 885
- US-A1- 2017 241 484

## Beschreibung

Die Erfindung betrifft eine Drehmomentübertragungsvorrichtung.

In Windkraftanlagen sowie anderen Antriebsanordnungen finden Drehmomentübertragungsvorrichtungen Verwendung, die der Übertragung eines Drehmoments von einer ersten, insbesondere antriebsseitigen Welle auf eine zweite, insbesondere abtriebsseitige Welle dienen. Dabei ist es aus der Praxis bereits bekannt, dass eine derartige Drehmomentübertragungsvorrichtung mehrere Kupplungseinrichtungen aufweist, nämlich eine erste Kupplungseinrichtung, die der Drehmomentübertragung und einem Wellenversatzausgleich zwischen den beiden Wellen dient, sowie eine zweite Kupplungsvorrichtung, die der Drehmomentübertragung und einer Drehmomentbegrenzung dient. Die beiden Kupplungseinrichtungen sind dabei hintereinander bzw. in Reihe geschaltet, das von der antriebsseitigen Welle in Richtung auf die abtriebsseitige Welle zu übertragende Drehmoment muss demnach von beiden Kupplungsvorrichtungen übertragen werden.

Bei aus der Praxis bekannten Drehmomentübertragungsvorrichtungen ist die zweite Kupplungsvorrichtung, die der Drehmomentübertragung und Drehmomentbegrenzung dient, typischerweise als drehmomentbegrenzendes Rutschelement ausgeführt. Bei Überschreitung eines Drehmoments kommt es zum Durchrutschen des Rutschelements, wodurch die Drehmomentbegrenzung bereitgestellt wird.

Die Druckschrift DE 40 28 158 A1 offenbart eine Drehmomentübertragungsvorrichtung für eine Antriebsanordnung zur Übertragung eines Drehmoments von einer ersten Welle auf eine zweite Welle, mit einer Kupplungseinrichtung, die der Drehmomentübertragung und einer Drehmomentbegrenzung dient, wobei Kupplungseinrichtung ein als Hohlbauteil ausgebildetes Innenteil und ein als Hohlbauteil ausgebildetes Außenteil aufweist, das Innenteil weist mit einem Druckmedium befüllbare Druckkammer auf, über welche zur Bereitstellung der Drehmomentbegrenzung ein von den Reibflächen maximal übertragbares Drehmoment einstellbar ist.

Es besteht Bedarf an einer Drehmomentübertragungsvorrichtung, die einerseits über einen einfachen Aufbau verfügt und andererseits zuverlässig Drehmomente übertragen sowie zu übertragende Drehmomente begrenzen kann.

Hiervon ausgehend liegt der vorliegenden Erfindung die Aufgabe zugrunde, eine neuartig Drehmomentübertragungsvorrichtung zu schaffen.

Diese Aufgabe wird durch eine Drehmomentübertragungsvorrichtung nach Anspruch 1 gelöst.

Erfindungsgemäß weist die zweite Kupplungseinrichtung ein als Hohlbauteil ausgebildetes Innenteil und ein als Hohlbauteil ausgebildetes Außenteil auf. Das Innenteil der zweiten Kupplungseinrichtung weist radial außen eine erste Reibfläche und das Außenteil der zweiten Kupplungseinrichtung weist radial innen eine sich radial außen an die erste Reibfläche anschließende und mit derselben zusammenwirkende zweite Reibfläche auf. Das Innenteil der zweiten Kupplungseinrichtung weist eine mit einem Druckmedium befüllbare Druckkammer auf, über welche zur Bereitstellung der Drehmomentbegrenzung ein von den Reibflächen maximal übertragbares Drehmoment einstellbar ist.

Über die zweite Kupplungseinrichtung mit den zusammenwirkenden Reibflächen, die mithilfe der mit dem Druckmedium befüllbaren Druckkammer gegeneinander gepresst werden, kann einerseits Drehmoment zuverlässig übertragen sowie begrenzt werden.

Dabei sind die beiden Teile der zweiten Kupplungseinrichtung, also das Innenteil und das Außenteil, welche die beiden Reibflächen bereitstellen, jeweils als Hohlbauteil ausgeführt. Dies verfügt über den Vorteil, dass ein sich im Betrieb ggf. ausbildender Verschleiß an der zweiten Kupplungseinrichtung durch selbsttätiges Nachfedern des Innenteils der zweiten Kupplungseinrichtung zumindest teilweise selbsttätig kompensiert werden kann. Dadurch ist eine besonders zuverlässige Drehmomentübertragung und Drehmomentbegrenzung selbst bei gewissem Verschleiß der zweiten Kupplungseinrichtung möglich.

Nach einer vorteilhaften Weiterbildung weist das Innenteil an einer Seite einen nach radial außen gerichteten Vorsprung auf, der einen Anschlag für eine Seite des Außenteils bildet und/oder einen Druckanschluss für die Druckkammer aufweist. Hiermit kann einerseits eine definierte Axialposition zwischen den beiden Teilen der zweiten Kupplungseinrichtung gewährleistet werden, andererseits wird erfindungsgemäß über den Druckanschluss der Druck in der Druckkammer auch während des Betriebs eingestellt.

Erfindungsgemäß ist über den Druckanschluss der in der Druckkammer herrschende Druck im Betrieb einstellbar und veränderbar, insbesondere ist über den Druckanschluss der in der Druckkammer herrschende Druck im Betrieb auf Null reduzierbar und dadurch die zweite Kupplungseinrichtung bezüglich Drehmomentübertragung bzw. Kraftfluss trennbar. Hiermit ist ein besonders vorteilhafter Betrieb der Drehmomentübertragungseinrichtung möglich.

Die Drehmomentübertragungsvorrichtung ist vorzugsweise Bestandteil einer Antriebsanordnung einer Windkraftanlage. Die Verwendung der Drehmomentübertragungsvorrichtung in Windkraftanlagen ist besonders bevorzugt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine Drehmomentübertragungsvorrichtung im teilweisen Querschnitt;
- Fig. 2:: ein Detail der Drehmomentübertragungsvorrichtung nach Fig. 1.

Die Erfindung betrifft eine Drehmomentübertragungsvorrichtung.

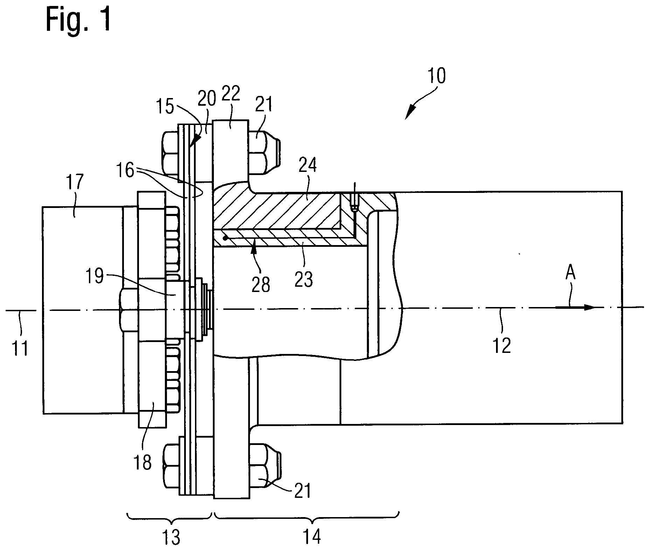

Fig. 1 zeigt eine Seitenansicht einer Drehmomentübertragungsvorrichtung 10 für eine Antriebsanordnung vorzugsweise einer Windkraftanlage, die der Übertragung eines Drehmoments von einer nicht gezeigten ersten, insbesondere antriebsseitigen Welle auf eine nicht gezeigten zweite, insbesondere abtriebsseitige Welle dient. In Fig. 1 sind lediglich eine Längsachse und damit Drehachse 11 der ersten Welle sowie eine Längsachse und damit Drehachse 12 der zweiten Welle gezeigt.

Die erfindungsgemäße Drehmomentübertragungsvorrichtung 10 verfügt über eine erste Kupplungseinrichtung 13 sowie eine in Reihe bzw. in Serie zur ersten Kupplungseinrichtung 13 geschaltete zweite Kupplungseinrichtung 14, sodass demnach beide Kupplungseinrichtungen 13, 14 hintereinander geschaltet sind.

Die erste Kupplungseinrichtung 13 dient der Drehmomentübertragung sowie einem Wellenversatzausgleich zwischen den beiden Wellen, nämlich den Drehachsen 11, 12 der beiden Wellen.

Im gezeigten Ausführungsbeispiel wird die erste Kupplungseinrichtung 13 von einer Lamellenkupplung bereitgestellt, die ein Lamellenpaket 15 aus mehreren Lamellen 16 aufweist, die in Axialrichtung A der Wellen bzw. Drehachsen 11, 12 gesehen zusammengepresst sind. So zeigt Fig. 1 einen Flansch 17 mit einem Flanschblatt 18, wobei der Flansch 17 der Anbindung der Drehmomentübertragungsvorrichtung 10 an die nicht gezeigte erste Welle dient. Die Lamellen 16 stehen über eine Distanzbuchse 19 mit dem Flanschblatt 18 des Flansches 17 in Verbindung, wobei sich die Distanzbuchse 19 durch einen zentralen, inneren Bereich der Lamellen 16 des Lamellenpakets 15 erstreckt. Die Distanzbuchen 19 und 20 sin außen angeordnet. Durch die Vorderansicht ist die Distanzbuche 19 in Überdeckung mit der Drehachse 11.

An einem radial äußeren Abschnitt sind die Lamellen 16 des Lamellenpakets 15 über eine Distanzbuchse 20 und Schrauben 21 an einem Flansch 22 der zweiten Kupplungseinrichtung 14 befestigt.

Die zweite Kupplungseinrichtung 14 dient ebenso wie die erste Kupplungseinrichtung 13 der Drehmomentübertragung und weiterhin einer Drehmomentbegrenzung des übertragbaren Drehmoments.

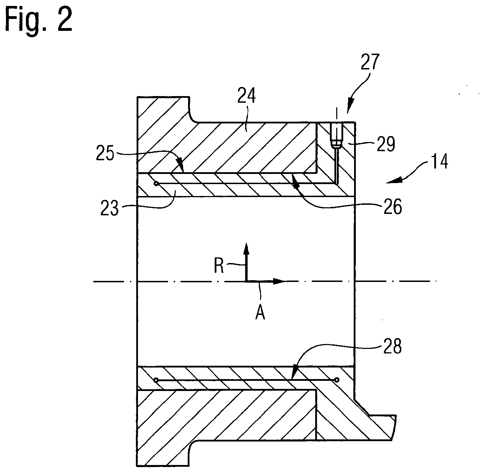

Die zweite Kupplungseinrichtung 14 verfügt über ein als Hohlbauteil ausgebildetes Innenteil 23 sowie über ein als Hohlbauteil ausgebildetes Außenteil 24. Fig. 2 zeigt diese beiden als Hohlbauteile ausgebildeten Teile 23, 24 der zweiten Kupplungseinrichtung 14 im Querschnitt in Alleindarstellung.

Das als Hohlbauteil ausgebildete Innenteil weist radial außen eine erste Reibfläche 25 auf. Das Außenteil 24 weist radial innen eine zweite Reibfläche 26 auf. Diese beiden Reibflächen 25, 26 grenzen in Radialrichtung R gesehen aneinander an und wirken zur Drehmomentübertragung sowie Drehmomentbegrenzung zusammen. Eine Reibkraft zwischen diesen zylindrischen oder kegeligen Reibflächen 25, 26, die radial aneinander angrenzen, bestimmt das von der zweiten Kupplungseinrichtung 14 maximal übertragbare Drehmoment.

In das Innenteil 23 ist eine mit einem Druckmedium befüllbare Druckkammer 28 eingebracht. Die mit dem Druckmedium befüllbare Druckkammer 28 dient der Einstellung des von den Reibflächen maximal übertragbaren Drehmoments und demnach der Bereitstellung der Drehmomentbegrenzung, nämlich dadurch, dass die Druckkammer 28 mit einem definierten Druckmediumdruck befüllt wird, welcher die Pressung zwischen den zusammenwirkenden Reibflächen 25, 26 der beiden Teile 23, 24 der zweiten Kupplungseinrichtung 14 bestimmt.

Sollte das an der Drehmomentübertragungsvorrichtung 10 anliegende Moment größer werden als das infolge der Pressung zwischen den Reibflächen 25, 26 der beiden Teile 23, 24 der zweiten Kupplungseinrichtung 14 übertragbare Moment, so rutscht die zweite Kupplungseinrichtung 14 durch und begrenzt das Drehmoment zum Überlastschutz.

Sollte sich hierbei im Bereich der Reibflächen 25, 26 der beiden Teile 23, 24 der zweiten Kupplungseinrichtung 14 ein Materialabtrag infolge eines Verschleißes ausbilden, der eigentlich zu einer Reduzierung der Pressung zwischen den Reibflächen 25, 26 und damit zur Reduzierung des bei gleichbleibendem Fülldruck der Druckkammer 28 übertragbaren Drehmoments führt, so kann dies dadurch, dass das Innenteil 23 der zweiten Kupplungseinrichtung 14 als Hohlbauteil ausgeführt ist, teilweise kompensiert werden, nämlich dadurch, dass das Innenteil 23 nach radial außen elastisch nachfedert.

Zur Befüllung der Druckkammer 28 mit Druckmedium ist ein Druckanschluss 27 vorgesehen. Der Druckanschluss 27 ist dabei in einen nach radial außen gerichteten Vorsprung 29 des Innenteils 23 der zweiten Kupplungseinrichtung 14 eingebracht.

Dieser Vorsprung 27 dient weiterhin der Bereitstellung eines axialen Anschlags für das Außenteil 24, um so eine definierte Relativposition in Axialrichtung zwischen den beiden Teilen 23, 24 der zweiten Kupplungseinrichtung 14 bereitzustellen.

Im Betrieb der Drehmomentübertragungsvorrichtung 10 kann über den Druckanschluss 27 der in der Druckkammer 28 herrschende Druck und damit die Flächenpressung zwischen den Reibflächen 25, 26 der beiden Teile 23, 24 der zweiten Kupplungseinrichtung 14 eingestellt werden, insbesondere auch auf Null reduziert werden, um im Falle eines auf Null reduzierten Drucks in der Druckkammer die zweite Kupplungseinrichtung zu trennen und dann die Drehmomentübertragung ausgehend von der ersten, antriebsseitigen Welle in Richtung auf die zweite, abtriebsseitige Welle zu unterbrechen. Damit ist ein besonders vorteilhafter Betrieb möglich, ferner können Wartungsarbeiten einfach ausgeführt werden.

Die erfindungsgemäße Drehmomentübertragungsvorrichtung 10 verfügt demnach über die zweite Kupplungseinrichtung 14, die eine Art hydraulisches Spannelement mit den beiden Teilen 23, 24 bereitstellt. Die beiden Teile 23, 24 sind jeweils als Hohlbauteile ausgeführt. In das als Hohlbauteil ausgebildete Innenteil 23 ist die Druckkammer 28 eingebracht. Ist die Druckkammer 28 des Innenteils 23 mit Druck beaufschlagt, so verformt sich das Innenteil 23 elastisch. Das Volumen der Drucckammer 28 wird vergrößert, die radial äußere Reibfläche 25 des Innenteils 23 wird nach radial außen gegen die radial innere Reibfläche 26 des Außenteils 24 gedrückt. Bei einem Verschleiß an den gegeneinander gepressten Reibflächen 25, 26 kann das als Hohlbauteil ausgebildete Innenteil 23 elastisch nach außen nachfedern. Dadurch kann eine verschleißbedingte Reduzierung der Flächenpressung zwischen den Reibflächen 25, 26 zumindest teilweise kompensiert werden.

Die erfindungsgemäße Drehmomentübertragungsvorrichtung 10 findet besonders vorteilhaft in Windkraftanlagen Einsatz, um zum Beispiel eine durch Windböen verursachte Überlastung derselben zu vermeiden.

Die Drehmomentübertragungsvorrichtung kann auch in Walzwerken für Stahl, Schiffsantrieben oder sonstigen Antriebsanordnungen zum Einsatz kommen, die Anwendung in Windkraftanlagen ist jedoch bevorzugt.

### Bezugszeichenliste

- 10: Drehmomentübertragungsvorrichtung
- 11: Drehachse
- 12: Drehachse
- 13: Kupplungseinrichtung
- 14: Kupplungseinrichtung
- 15: Lamellenpaket
- 16: Lamelle
- 17: Flansch
- 18: Flanschblatt
- 19: Distanzhülse
- 20: Distanzhülse
- 21: Schraube
- 22: Flansch
- 23: Innenteil
- 24: Außenteil
- 25: Reibfläche
- 26: Reibfläche
- 27: Druckanschluss
- 28: Druckkammer
- 29: Vorsprung

## Patentansprüche

1. Drehmomentübertragungsvorrichtung für eine Antriebsanordnung zur Übertragung eines Drehmoments von einer ersten Welle auf eine zweite Welle,
mit einer ersten Kupplungseinrichtung (13), die der Drehmomentübertragung und einem Wellenversatzausgleich dient,
mit einer zweiten Kupplungseinrichtung (14), die der Drehmomentübertragung und einer Drehmomentbegrenzung dient,
wobei die erste Kupplungseinrichtung (13) und die zweite Kupplungseinrichtuna (14) hintereinander geschaltet sind,
wobei die zweite Kupplungseinrichtung (14) ein als Hohlbauteil ausgebildetes Innenteil (23) und ein als Hohlbauteil ausgebildetes Außenteil (24) aufweist,
das Innenteil (23) radial außen eine erste Reibfläche (25) und das Außenteil (24) radial innen eine sich radial außen an die erste Reibfläche (25) anschließende und mit derselben zusammenwirkende zweite Reibfläche (26) aufweist,
das Innenteil (23) eine mit einem Druckmedium befüllbare Drucckammer (28) aufweist, über welche zur Bereitstellung der Drehmomentbegrenzung ein von den Reibflächen maximal übertragbares Drehmoment einstellbar ist, **wobei das Innenteil (23) einen Druckanschluss (27) für die Druckkammer (28) aufweist und der über den Druckanschluss (27) der in der Druckkammer (28) herrschende Druck im Betrieb einstellbar und veränderbar ist.**

2. Drehmomentübertragungsvorrichtung nach Anspruch 1, **dadurch gekennzeichnet, dass** das Innenteil (23) an einer Seite einen nach radial außen gerichteten Vorsprung (29) aufweist, der einen Anschlag für eine Seite des Außenteils (24) bildet.

3. Drehmomentübertragungsvorrichtung nach Anspruch 2, **dadurch gekennzeichnet, dass** das Außenteil (24) an einer gegenüberliegenden Seite einen Flansch (22) aufweist, welcher der Verbindung mit der ersten Kupplungseinrichtung (13) dient.

4. Drehmomentübertragungsvorrichtung nach Anspruch 3, **dadurch gekennzeichnet, dass** der Druckanschluss (27) in den nach radial außen gerichteten Vorsprung (29) des Innenteils (23) eingebracht ist.

5. Drehmomentübertragungsvorrichtung nach einem der Ansprüche 1 bis 4, **dadurch gekennzeichnet, dass** über den Druckanschluss (27) der in der Druckkammer (28) herrschende Druck auf Null reduzierbar und dadurch die zweite Kupplungseinrichtung (14) trennbar ist.

6. Drehmomentübertragungsvorrichtung nach einem der Ansprüche 1 bis 5, **dadurch gekennzeichnet, dass** die erste Kupplungseinrichtung (13) eine nicht schaltbare Lamellenkupplung ist.

7. Drehmomentübertragungsvorrichtung nach einem der Ansprüche 1 bis 6, **dadurch gekennzeichnet, dass** dieselbe Bestandteil einer Antriebsanordnung einer Windkraftanlage ist.

## Claims

1. A torque transmitting apparatus for a drive assembly for transmitting a torque from a first shaft to a second shaft,
with a first coupling device (13) that is used for transmitting torques and compensating a shaft offset,
with a second coupling device (14) that is used for transmitting torques and limiting torques,
wherein the first coupling device (13) and the second coupling device (14) are connected in series,
wherein the second coupling device (14) has an inner part (23) in the form of a hollow component and an outer part (24) in the form of a hollow component,
the inner part (23) has on its radially outer side a first friction surface (25) and the outer part (24) has on its radially inner side a second friction surface (26), which adjoins the first friction surface (25) radially outward and interacts therewith,
the inner part (23) has a pressure chamber (28) that can be filled with a pressure medium and makes it possible to adjust a torque, which is the maximum torque transmittable by the friction surfaces, in order to provide the torque limiting, wherein the inner part (23) has a pressure connection (27) for the pressure chamber (28) and the pressure in the pressure chamber (28) can be adjusted and varied during the operation by means of the pressure connection (27).

2. The torque transmitting apparatus according to claim 1, **characterized in that** the inner part (23) has on one side a projection (29), which is directed radially outward and forms a stop for one side of the outer part (24).

3. The torque transmitting apparatus according to claim 2, **characterized in that** the outer part (24) has on an opposite side a flange (22), which serves for producing the connection with the first coupling device (13).

4. The torque transmitting apparatus according to claim 3, **characterized in that** the pressure connection (27) is incorporated into the projection (29) of the inner part (23), which is directed radially outward.

5. The torque transmitting apparatus according to one of claims 1 to 4, **characterized in that** the pressure in the pressure chamber (28) can be reduced to zero by means of the pressure connection (27) and the second coupling device (14) can thereby be separated.

6. The torque transmitting apparatus according to one of claims 1 to 5, **characterized in that** the first coupling device (13) is a rigid multi-disk coupling.

7. The torque transmitting apparatus according to one of claims 1 to 6, **characterized in that** the torque transmitting apparatus is a component of a drive assembly of a wind power plant.

## Revendications

1. Dispositif de transmission du couple pour un ensemble d'entraînement, destiné à transmettre un couple d'un premier arbre sur un deuxième arbre,
pourvu d'un premier système d'accouplement (13), qui sert à transmettre le couple et à équilibrer le désalignement de l'arbre,
pourvu d'un deuxième système d'accouplement (14), qui sert à transmettre le couple et à limiter le couple,
le premier système d'accouplement (13) et le deuxième système d'accouplement (14) étant montés l'un derrière l'autre,
le deuxième système d'accouplement (14) comportant une partie intérieure (23), conçue sous la forme d'un élément creux et une partie extérieure (24), conçue sous la forme d'un élément creux,
la partie intérieure (23) comportant à l'extérieur en direction radiale une première surface de friction (25) et la partie extérieure (24) comportant à l'intérieur en direction radiale une deuxième surface de friction (26) se raccordant à l'extérieur en direction radiale sur la première surface de friction (25) et coopérant avec cette dernière,
la partie intérieure (23) comportant une chambre sous pression (28) susceptible d'être remplie d'un agent sous pression, par l'intermédiaire de laquelle, pour mettre à disposition la limitation de couple, un couple maximum susceptible d'être transmis par les surfaces de friction est réglable, la partie intérieure (23) comportant un raccord de pression (27) pour la chambre sous pression (28) et la pression régnant dans la chambre sous pression (28) par l'intermédiaire du raccord de pression (27) étant réglable et variable en cours de fonctionnement.

2. Dispositif de transmission du couple selon la revendication 1, **caractérisé en ce que** la partie intérieure (23) comporte sur un côté une saillie (29) dirigée vers l'extérieur en direction radiale, qui forme une butée pour un côté de la partie extérieure (24) .

3. Dispositif de transmission du couple selon la revendication 2, **caractérisé en ce que** la partie extérieure (24) comporte sur un côté opposé une bride (22), laquelle sert à l'assemblage avec le premier système d'accouplement (13).

4. Dispositif de transmission du couple selon la revendication 3, **caractérisé en ce que** le raccord de pression (27) est introduit dans la saillie (29) dirigée vers l'extérieur en direction radiale de la partie intérieure (23).

5. Dispositif de transmission du couple selon l'une quelconque des revendications 1 à 4, **caractérisé en ce que** par l'intermédiaire du raccord de pression (27), la pression régnant dans la chambre sous pression (28) est susceptible d'être réduite à zéro et de ce fait, le deuxième système d'accouplement (14) est désolidarisable.

6. Dispositif de transmission de couple selon l'une quelconque des revendications 1 à 5, **caractérisé en ce que** le premier système d'accouplement (13) est un accouplement à lamelles non commutable.

7. Dispositif de transmission de couple selon l'une quelconque des revendications 1 à 6, **caractérisé en ce qu'**il est un élément d'un ensemble d'entraînement d'une éolienne.
